Europäisches Patentamt

European Patent Office

Office européen des brevets

(11) Veröffentlichungsnummer: **0 345 691**
**A1**

## (12) EUROPÄISCHE PATENTANMELDUNG

(21) Anmeldenummer: 89110135.4

(51) Int. Cl.4: **B27B 5/06**

(22) Anmeldetag: 05.06.89

(30) Priorität: 07.06.88 DE 3819321

(43) Veröffentlichungstag der Anmeldung:
13.12.89 Patentblatt 89/50

(84) Benannte Vertragsstaaten:
AT BE CH DE ES FR GB GR IT LI LU NL SE

(71) Anmelder: **Wilhelm Altendorf GmbH & Co. KG,
Maschinenbau
Wettiner Allee 43/45
D-4950 Minden(DE)**

(72) Erfinder: **Thiele, Siegfried
Tannenweg 1
D-4950 Minden(DE)**

(74) Vertreter: **Eisenführ & Speiser
Martinistrasse 24
D-2800 Bremen 1(DE)**

(54) Werkstücktisch für eine Platten-Sägemaschine.

(57) Der Werkstücktisch (6) einer - insbesondere vertikal arbeitenden - Sägemaschine für Holzplatten hat einen die Platte aufspannenden Druckbalken (15), der mittels wenigstens eines Schwenkarmes (16) aus dem Auflagebereich des Werkstücktisches (6) herausschwenkbar ist.

Fig. 1

EP 0 345 691 A1

## Werkstücktisch für eine Platten-Sägemaschine

Die Erfindung betrifft einen Werkstücktisch für eine insbesondere im wesentlichen vrtikal verfahrbare Platten-Sägemaschine, deren Sägeaggregat hinter der Auflageebene des Tisches angeordnet ist, mit

    a) einem die Auflageebene definierenden Platten- oder Rahmenwerk,

    b) einem das Platten- oder Rahmenwerk tragenden Gestell und

    c) einem sich in Verfahrrichtung des Sägeaggregats und diesem gegenüber vor dem Platten- oder Rahmenwerk erstreckenden Druckbalken, der ganz oder abschnittsweise (Andruckleisten) gegen das Platten-oder Rahmenwerk preßbar bzw. von diesem abhebbar ist, um ein dazwischen liegendes Platten-Werkstück einzuspannen.

Sogenannte vertikale Plattensägen sind allgemein bekannt. Sie dienen zum Zuschneiden von Platten namentlich aus Holzwerkstoffen (beschichtete und unbeschichtete Spanplatten, Tischlerplatten etc.). Der Auflagetisch für das plattenförmige Werkstück ist nur etwas gegen die Vertikale geneigt, und die auf einen unteren Anschlag (welcher meist durch die horizontale Tangente an eine Reihe nebeneinanderliegender Rollen definiert ist) gestellte Platte liegt - im wesentlichen aufrechtstehend - an diesem nahezu vertikalen Tisch an. Das Sägeaggregat, welches bei der hier betrachteten Gattung hinter dem Tisch angeordnet ist, läßt sich in einer vertikalen Führung derart verfahren, daß das Kreissägeblatt durch das Platten- oder Rahmenwerk des Tisches hindurchragt und die daran anliegende Platte schneidet.

Um die zu schneidende Platte auf dem Werkstücktisch - in der maßgerechten Stellung - zu fixieren und dem Arbeitsdruck des Sägeaggregats entgegenzuwirken, welcher das Werkstück vom Tisch abzuheben trachtet, ist ein Druckbalken vorgesehen, der den Werkstücktisch (vertikal) überspannt und regelmäßig aus einem zum Werkstücktisch hin offenen U-Profil besteht, in das das Sägeblatt beim Trennvorgang eintaucht. Im allgemeinen ist die Anordnung so getroffen, daß an den seitlichen Schenkeln des U-Profils Andruckleisten geführt sind, die eine Gummiauflage tragen und mit dieser beidseitig der Trennlinie gegen das Werkstück auf dem Werkstücktisch preßbar bzw. von diesem über einen begrenzten Weg abhebbar sind. Dann läßt sich, nachdem ein erster Trennschnitt abgeschlossen ist, ein paralleler zweiter Trennschnitt am Rest der Werkstückplatte dadurch rasch bewerkstelligen, daß man auf den vorerwähnten Rollen diesen Plattenrest seitlich verschiebt und mit Hilfe des Druckbalkens bzw. seiner Andruckleisten erneut einspannt.

Die Handhabung bekannter Geräteanordnungen dieser Art leidet an dem Mangel, daß eine neu auf den Werkstücktisch aufgelegte Platte zunächst neben dem Druckbalken auf den Werkstücktisch aufgelegt und dann seitlich unter den Druckbalken verschoben werden muß. Der Werkstücktisch muß also neben dem Druckbalken jedenfalls auf dessen einer Seite so groß sein, daß er die Rohplatte aufzunehmen imstande ist. Es müssen auch entsprechend viele den unteren Anschlag bildende Rollen vorgesehen werden. Der bauliche Aufwand ist somit relativ groß, und entsprechendes gilt für den Platzbedarf in einer Werkstatt, in der eine derart ausgebildete vertikale Plattensäge aufgestellt werden soll.

Der Erfindung liegt die Aufgabe zugrunde, diesen baulichen Aufwand und Platzbedarf zu verringern.

Gelöst wird diese Aufgabe erfindungsgemäß dadurch, daß der Druckbalken mit Hilfe mindestens eines Schwenkarmes aus dem vom Außenrand des Platten- oder Rahmenwerks (des Werkstücktisches) umschriebenen, sich senkrecht zur Auflageebene erstreckenden Auflagebereich schwenkbar ist. Beispielsweise kann der Druckbalken nach oben hochgeschwenkt werden. Vorzugsweise ist jedoch vorgesehen, daß der Druckbalken mittels zweier, an den sich quer zur Verfahrrichtung des Sägeaggregats erstreckenden Längsrändern des Platten- oder Rahmenwerks angelenkten Schwenkarmen um eine zu seiner Längserstreckung parallele Achse am Seitenrand des Platten- oder Rahmenwerks vorbei hinter die Auflageebene schwenkbar ist.

Auf diese Weise steht die gesamte Werktischoberfläche (Auflagefläche) als Beschickungsbereich zur Verfügung. Die zu schneidende Platte kann jetzt also auch dort auf den Werktisch aufgelegt werden, wo dies bisher vom Druckbalken verhindert wurde, und das gilt ferner für denjenigen Auflagebereich des Tisches, der auf der anderen Seite des Druckbalkens als der herkömmlich (allein) zur Verfügung stehende Beschickungsbereich liegt. Jedenfalls für den Regelfall läßt sich daher der Werkstücktisch - quer zur Verfahrrichtung des Sägeaggregats - erheblich verkürzen, so daß auch entsprechend weniger Werkstattraum benötigt wird.

Es wird im allgemeinen ausreichen, eine manuelle Betätigung der Druckbalken-Schwenkbewegung vorzusehen. Insbesondere dann wird man eine - beim Einklappen beispielsweise einrastende - Verriegelung des Druckbalkens in seiner Wirkstellung vorsehen, so daß der Druckbalken in einer bestimmten Relativstellung zum Platten- oder Rahmenwerk des Tisches arretiert ist und nur noch die Andruckleisten an das Werkstück anpreßbar bzw. von diesem (begrenzt) abhebbar sind. Aus einleuchtenden Sicherheitsgründen ist die mechanische Verriegelung des Druckbalkens in seiner Wirkstellung mit einer elektrischen Schaltsperre für das Sägeaggregat kombiniert, welche in der Wirkstellung des Druckbalkens (und damit geschlossener Verriegelung) aufgehoben ist.

Es ist jedoch auch möglich, einen am Schwenkarm angreifenden Antrieb für die Schwenkbewegung des Druckbalkens vorzusehen, und die elektrischen Bedienelemente hierfür, das Sägeaggregat und gegebenenfalls weitere elektrische, hydraulische und/oder pneumatische Antriebe können im Druckbalken angeordnet sein.

Vorzugsweise ist ferner am unteren Schwenkarm eines im wesentlichen vertikal angeordneten Druckbalkens (also bei einer vertikalen Plattensäge) ein fußbetätigter Schalter für den Antrieb und/oder andere Funktionen angeordnet. Zu diesen anderen Funktionen können insbesondere Antriebe der Rollen gehören, auf denen das plattenförmige Werkstück im Bereich des unteren Tisch-Längsrandes aufsteht, und/oder der Antrieb für die aus dem Druckbalken auszufahrenden und in diesen zurückzuziehenden Andruckleisten.

Es liegt nahe, den U-förmigen Druckbalken, dessen Innenraum beim Sägen durch die Andruckleisten seitlich abgedichtet ist, als Teil des Kanalsystems für die Späneabsaugung vorzusehen. In bevorzugter Weiterbildung der Erfindung ist vorgesehen, daß mindestens ein Schwenkarm als Hohlprofil ausgebildet ist und - zum Innenraum des Druckbalkens hin offen - mit diesem einen Teil des Absaugkanals für Sägeabfälle bildet.

Die Zeichnung veranschaulicht die Erfindung an einem Ausführungsbeispiel, und zwar zeigt:

Fig. 1 eine Ansicht (im wesentlichen) von oben auf den Werkstücktisch (nebst Gestell und Maschinenaggregat) in schematischer Darstellung;

Fig. 2 eine Seitenansicht dieser vertikalen Plattensäge;

Fig. 3 einen Schnitt gemäß der Linie III-III in Fig. 1; und

Fig. 4 einen Schnitt gemäß der Linie IV-IV in Fig. 1.

Ein im ganzen mit 1 bezeichnetes Maschinengestell, welches vorderseitige Streben 2 und rückseitige Streben 3, eine Bodenplatte 4 und Pratzen 5 aufweist, trägt vorderseitig einen im ganzen mit 6 bezeichneten Werkstücktisch, der zur Aufnahme (Auflage) einer zu sägenden Platte dient. Zwischen den vorderseitigen Streben 2 ist außerdem das nur angedeutete Sägeaggregat 7 angeordnet und - im wesentlichen - vertikal geführt.

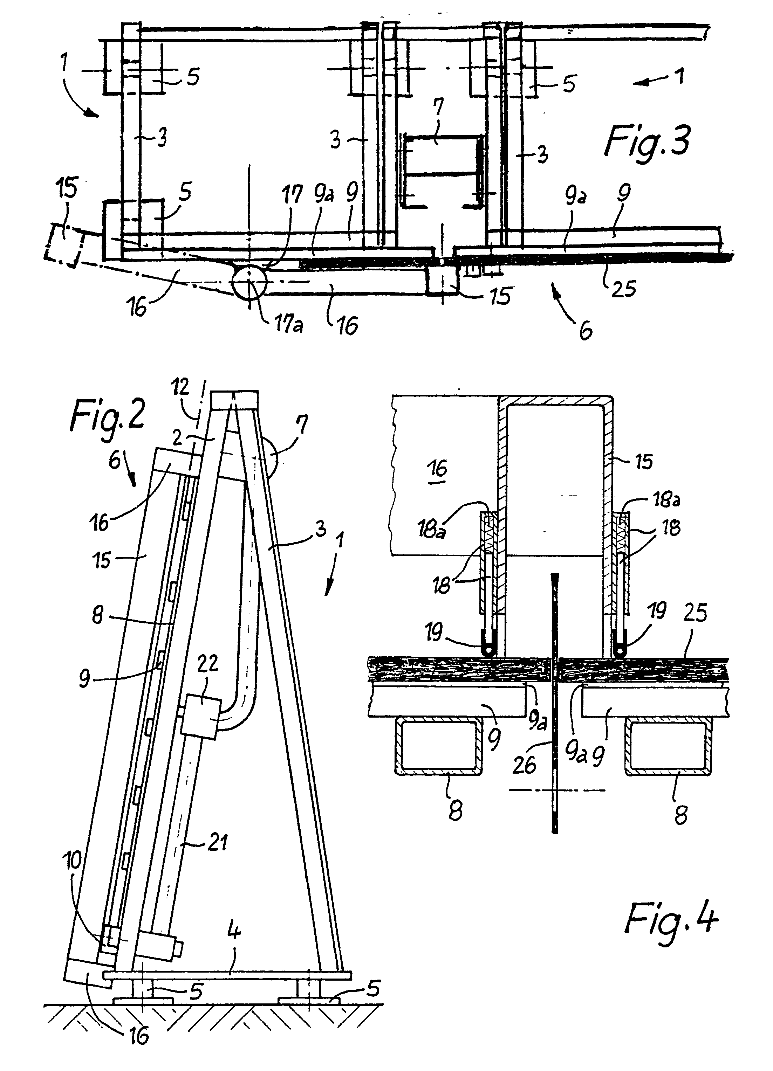

Der Werkstücktisch 6 besteht aus einem Rahmenwerk vertikaler Holme 8 und horizontaler Holme 9; die Felder I, II und III sind baugleich und untereinander verbunden. Die horizontalen Holme 9 sind mit durchlaufenden Kunststoffauflagen 9a versehen, welche nur in der Schnittlinie des Kreissägeblatts 26 unterbrochen sind (vgl. Fig. 4).

Der untere - durchgehende und verstärkte - horizontale Rahmenholm 10, welcher zugleich den unteren Längsrand des Tisches 6 bildet, trägt Rollen 11, welche über die Auflageebene 12 des Werkstücktisches 6 vorstehen und mit ihrer gemeinsamen oberen Tangente den unteren Anschlag für das plattenförmige Werkstück 25 definieren. Mindestens eine der Rollen 11 ist antreibbar, so daß eine auf den Rollen 11 aufstehende Platte zur Seite verfahren werden kann. Für kleinere Platten sind - wie üblich - herausklappbare Schienen 13 vorgesehen, und ein verstellbarer Maßanschlag 14 bestimmt die Breite des von der Säge abzutrennenden Plattenteils.

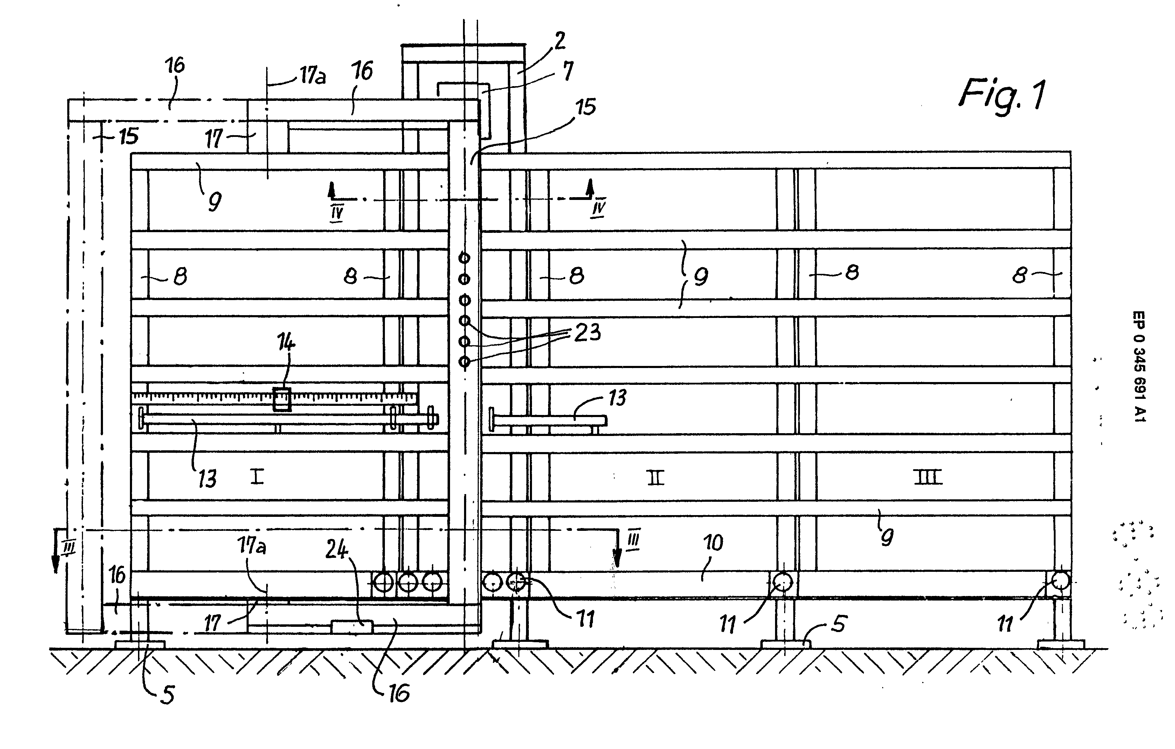

Der Druckbalken 15, den Fig. 1 mit ausgezogenen Linien in seiner Wirkstellung gegenüber dem Arbeitsweg des Sägeaggregats 7 zeigt, ist endseits an den freien Enden von Schwenkarmen 16 befestigt, welche mit ihren anderen Enden an den oberen und unteren vertikalen Rahmenholmen 9, 10 (bzw. in deren Bereich) mittels Lagerböcken 17 um die Parallel zur Längserstreckung des Druckbalkens 15 verlaufende Achse 17a schwenkbar angelenkt sind. Die abgeschwenkte Stellung des Druckbalkens 15, in der er hinter der Auflageebene 12 liegt, ist in den Fig. 1 und 3 strichpunktiert angedeutet. Zwischen der Wirk- und der Ausklappstellung des Druckbalkens 15 liegt ein Schwenkwinkel von etwa 180°.

Wie insbesondere Fig. 4 erkennen läßt, hat der Druckbalken 15 ein zum Werkstück 6 hin offenes U-Profil. Er trägt im Bereich beider Schenkel des U Andruckleisten 18 mit einer Gummiauflage 19. Federn 18a spannen die Andruckleisten gegen den Tisch und damit die Werkstück-Platte 25 vor; mittels nicht dargestellter Kraftgeräte (beispielsweise Hydraulik- oder Pneumatikzylinder) können die Andruckleisten gegen die Kraft der Federn 18a von der Platte 25 abgezogen werden.

Die Schwenkarme 16 bestehen aus Hohlprofilen, sind stirnseits geschlossen und an den Innenraum des Druckbalkens 15 angeschlossen, so daß mindestens einer der Schwenkbalken 16 einen Kanal bildet, der im Bereich seiner Schwenklagerung in geeigneter Weise mit einem Schlauch o.dgl. an das Absaugsystem für Sägeabfälle angeschlossen ist. Fig. 2 zeigt einen Schlauch 20 und ein Rohr 21 sowie ein Verbindungsstück 22, welche ebenfalls zum Absaugsystem gehören; der Schlauch 20 ist an das Sägeaggregat 7 angeschlossen.

Auf der Vorderseite des Druckbalkens 15 sind Bedienelemente 23 für verschiedene Antriebe und sonstige Funktionen (Sägeaggregat 7 etc.) erkennbar. Ferner ist am unteren Schwenkarm 16 ein Fußschalter 24 angeordnet, mit welchem beispielsweise die - nicht dargestellte - Betätigungseinrichtung für die Andruckleisten 18 im Druckbalken 15 sowie die angetriebene(n) Rolle-(n) 11 eingeschaltet werden können.

## Ansprüche

1. Werkstücktisch für eine insbesondere im wesentlichen vertikal verfahrbare Platten-Sägemaschine, deren Sägeaggregat hinter der Auflageebene des Tisches angeordnet ist, mit
a) einem die Auflageebene definierenden Platten- oder Rahmenwerk,
b) einem das Platten- oder Rahmenwerk tragenden Gestell und
c) einem sich in Verfahrrichtung des Sägeaggregats und diesem gegenüber vor dem Platten- oder Rahmenwerk erstreckenden Druckbalken, der ganz oder abschnittsweise (Andruckleisten) gegen das Platten-oder Rahmenwerk preßbar bzw. von diesem abhebbar ist, um ein dazwischen liegendes Platten-Werkstück einzuspannen,
dadurch gekennzeichnet, daß der Druckbalken (15) mit Hilfe mindestens eines Schwenkarmes (16) aus dem vom Außenrand des Platten- oder Rahmenwerks (8, 9, 10) umschriebenen, sich senkrecht zur Auflageebene (12) erstreckenden Auflagebereich schwenkbar ist.

2. Werkstücktisch nach Anspruch 1, dadurch gekennzeichnet, daß der Druckbalken (15) mittels zweier, an den sich quer zur Verfahrrichtung des Sägeaggregats (7) erstreckenden Längsrändern des Platten- oder Rahmenwerks (8, 9, 10) angelenkten Schwenkarmen (16) um eine zu seiner Längserstreckung parallele Achse (17) am Seitenrand (äußerer Rahmenholm 8) des Platten-oder Rahmenwerks vorbei hinter die Auflageebene (12) schwenkbar ist.

3. Werkstücktisch nach Anspruch 1 oder 2, dadurch gekennzeichnet, daß ein am Schwenkarm (16) angreifender Antrieb für die Schwenkbewegung des Druckbalkens (15) vorgesehen ist.

4. Werkstücktisch nach Anspruch 2 und 3, dadurch gekennzeichnet, daß bei einem im wesentlichen vertikal angeordneten Druckbalken (15) am unteren Schwenkarm (16) ein fußbetätigter Schalter (24) für den Antrieb und/oder andere Funktionen angeordnet ist.

5. Werkstücktisch nach mindestens einem der vorhergehenden Ansprüche, gekennzeichnet durch eine mechanische Verriegelung des Druckbalkens (15) in seiner Wirkstellung, in der er sich dem Sägeaggregat (7) gegenüber befindet und nur gegen das Platten- oder Rahmenwerk (8, 9, 10) anpreßbar bzw. von diesem begrenzt abhebbar ist, deren Schließen zugleich eine Schaltsperre für das Sägeaggregat aufhebt, die dessen Betätigung in der abgeschwenkten Stellung des Druckbalkens verhindert.

6. Werkstücktisch nach einem der Ansprüche 3 bis 5, dadurch gekennzeichnet, daß alle elektrischen Bedienelemente für den Schwenkantrieb des Druckbalkens (15), das Sägeaggregat (7) und ggf. weitere Elektroantriebe im Druckbalken (15) angeordnet sind.

7. Werkstücktisch nach mindestens einem der vorhergehenden Ansprüche, dadurch gekennzeichnet, daß mindestens ein Schwenkarm (16) als Hohlprofil ausgebildet ist und mit dem zur Auflageebene (12) hin offenen Druckbalken (15) einen Teil des Absaugkanals für Sägeabfälle bildet.

Fig. 1

*Fig.3*

*1*

*5*

*5*

*1*

*3*

*3*

*7*

*3*

*15*

*5*

*17* *9a* *9*

*9a* *9*

*16*

*17a* *16*

*15*

*25*

*6*

*Fig.2*

*12*

*2*

*7*

*6*

*16*

*3* *1*

*15*

*8*

*9*

*22*

*21*

*10*

*4*

*5*

*5*

*16*

*16*

*15*

*18a*

*18a*

*18*

*18*

*18*

*19*

*19*

*19*

*25*

*9a*

*9*

*26*

*9a* *9*

*8*

*8*

*Fig.4*

| EINSCHLÄGIGE DOKUMENTE | | | EP 89110135.4 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP - A1 - 0 019 230 <br> (REICH) <br><br> ---- | | B 27 B 5/06 |

RECHERCHIERTE
SACHGEBIETE (Int.-Cl.4)

B 27 B 5/00

Der vorliegende Recherchenbericht wurde für alle Patentansprüche erstellt.

| Recherchenort | Abschlußdatum der Recherche | Prüfer |
|---|---|---|
| WIEN | 25-08-1989 | TRATTNER |